# EUROPEAN PATENT SPECIFICATION

(11) **EP 3 200 057 B1**
(45) Date of publication and mention of the grant of the patent: **22.06.2022**
(21) Application number: 17000086.3
(22) Date of filing: 18.01.2017
(51) Int. Cl.: G06F 3/0481, G06Q 30/06

(54) **SHORT CUT LINKS IN A GRAPHICAL USER INTERFACE**
SHORTCUT-VERBINDUNGEN IN EINER GRAFISCHEN BENUTZEROBERFLÄCHE
LIENS DE RACCOURCI DANS UNE INTERFACE UTILISATEUR GRAPHIQUE

(30) Priority: 27.01.2016 FR 1650645; 27.01.2016 US 201615007913
(43) Date of publication of application: 02.08.2017
(73) Proprietor: Amadeus S.A.S., 06410 Biot (FR)
(72) Inventor: Courvoisier, Pierre, 75017 Paris (FR); Lee Ken Sang, Jason, 06600 Antibes (FR); Pierlot, Loic, 06130 Plascassier (FR); Reissman, Pierre-Jean, 06230 Villefranche sur Mer (FR); Smoaca, Andreea, 06600 Antibes (FR)
(74) Representative: Samson & Partner Patentanwälte mbB

(56) References cited:
- US-A1- 2009 222 737
- US-A1- 2013 166 582
- US-A1- 2013 238 783
- US-A1- 2014 215 495
- US-B1- 8 856 670

## Description

### BACKGROUND

The invention generally relates to electronic devices, e.g. computers, and computer software, and in particular to methods, systems, and computer program products for providing a short cut link in a graphical user interface (GUI).

A GUI displayed by an electronic device may have multiple screens to be displayed to a user in a screen-by-screen manner when the user navigates through the GUI. In most of the time, the user will not need to access each of the multiple screens. Instead, in particular situations, the user may require only some of the multiple screens. However, the user may be required to navigate through one or more screens s/he is not interested in, only for the reason of finally arriving at a desired screen of the GUI.

Thus, there is a need for improved devices, systems, methods, and computer program products for providing better navigation through a GUI.

US 2013/0166582 A1 describes operating a user interface including detecting a sequence of actions and accessing a database with pattern keys, which define a sequence of actions, and performing a predefined action in the user interface in relation to a specific end result of a matched pattern key. US 8,856,670 B1 describes to provide customized user interface in software to a user based on user behaviours while using the user interface during one or more sessions. US 2014/0215495 A1 describes monitoring user interactions with multiple applications. Screen contents may be used, based on comparison with task-specific screen-sequence patterns, to link sub-sequences of events to tasks. US 2009/222737 A1 describes improved web application navigations through a Web Portal with a hierarchical structure of portal pages. US 2013/238783 A1 describes generating shortcuts by storing tracked navigation paths of a user in a user profile.

### SUMMARY

The invention is defined by the independent claims alone. Additional embodiments are defined by the dependent claims.

### BRIEF DESCRIPTION OF THE DRAWINGS

The accompanying drawings, which are incorporated in and constitute a part of this specification, illustrate various embodiments and, together with the general description given above, and the detailed description of the embodiments given below, serve to explain the embodiments.
FIG. 1 is a diagrammatic view of an exemplary computer system configured to perform the methodologies described herein.
FIG. 2A is a diagrammatic view of a flow for performing a task of booking a hotel.
Fig. 2B is a diagrammatic view of a path with a start GUI screen, a current GUI screen, a next GUI screen and a target GUI screen with a short cut link provided to skip the next GUI screen.
FIG. 3A is a flow chart depicting a process that may be executed, e.g. by the computer system depicted in FIG.1, to implement the embodiments.
FIG. 3B is a flow chart depicting a process that may be executed, e.g. by the computer system depicted in FIG.1, to implement further embodiments.
FIG. 44A is a diagrammatic view of paths of two flows of a GUI including GUI screens.
FIG. 44B is a diagrammatic view of two scenarios of a GUI.

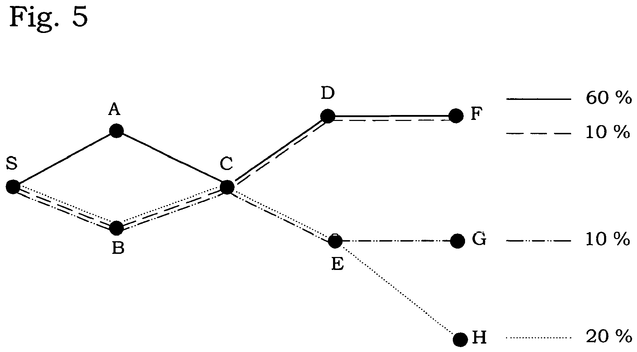

FIG. 5 is a graph representing GUI screens and paths

### DETAILED DESCRIPTION

The following detailed description concerns each of a method, an electronic device, an apparatus and an computer program product to provide at least one short cut link in a graphical user interface, GUI. Still further embodiments are specified by combinations of two or more of the following embodiments. The embodiments may be implemented by electronic devices, e.g. by single electronic devices or by systems including at least one electronic client device and at least one electronic server device.

The graphical user interface (GUI) has multiple GUI screens to enable a user to perform at least one task, e.g. a task of booking a hotel. The GUI screens may be defined in a GUI definition document (GUI definition), which might be maintained in database of the electronic device or external to the electronic device, e.g. in a server accessible via a network connection. The GUI definition may include definitions of the layout of the GUI screens. Furthermore, the GUI includes navigation definitions specifying for the GUI screens respective next GUI screens to be navigated to in response to a respective user action thereby defining the navigational behaviour of the GUI. For example, the navigation definitions may be included in the GUI definition document. Thus, on the basis of only a single document the GUI definition document at least defines the appearance of the GUI as well as the GUI's behaviour with regard to navigation through the GUI screens. Defining both, the layout and the navigation mechanisms of the GUI in a single GUI definition document (although this may include various files) reduces the effort for developing GUIs and/or allows a more compact, resource-friendly definition of the GUI. The GUI definition may be processed by the electronic device for displaying GUI screens and switching to appropriate next GUI screens in response to respective user actions.

When displayed, e.g. by the electronic device, some GUI screens may present information, as an address of the hotel, to the user. Some other GUI screens may provide user input fields, e.g. buttons, text input fields, selection fields or the like, for receiving user inputs, when displayed. Some other GUI screens may present information and provide one or more user input fields at the same time.

For example, the GUI may be web oriented, i.e. the GUI screens are configured to be browseable by a web browser. For example, the GUI definition document may be formulated including HTML 4.01 code. A short cut link may be represented by a graphical element displayed in a GUI screen. The graphical elements may be a HTML element that may receive focus, e.g. a button.

The electronic device may display the multiple GUI screens by switching the GUI from a current GUI screen to a next GUI screen selected from the multiple GUI screens in response to a user action. This enables a user to navigate through the GUI in a screen-by-screen manner. The expressions "navigating through the GUI" and "navigating through the GUI screens" have the same meaning herein and are to be understood as the user visiting some or all GUI screens in a current visit of the GUI. The expression "navigating a path" means that the user navigates along a (complete) path, i.e. the user navigates screen-by-screen along the sequence of GUI screens of the path. However, using short cut links to skip some of the path's GUI screens is also to be understood as "navigating the path". The GUI provides at least one path for navigating through the GUI, if not otherwise mentioned. A path includes a sequence of GUI screens. In the following, the expression "a path includes a GUI screen" is to be understood as the GUI screen is included in the path's sequence of GUI screens.

Providing a short cut link in the GUI enables a user to skip at least one GUI screen when navigating through the GUI. A short cut link points to a target GUI screen, which means that the short cut provides a reference to the target GUI screen, and, thereby, enables the user to skip one or more next GUI screens which otherwise the user necessarily has to navigate through to finally arrive at a desired target GUI screen. Thus, the short cut link enables the user to directly jump to the target GUI screen.

To provide a short cut link, the current navigational context (i.e. where the current GUIs screen and information about how the user navigated to the current GUI screen so far in the current visit of the GUI) are to be considered. Therefore, a sequence of GUI screens visited so far in the user's current visit of the GUI may be gathered as a recent GUI navigation history. The current context enables to determine possible candidate GUI screens to which the user is allowed to jump in view of the current context. Therefore, candidate paths are identified based on the recent GUI navigation history. A candidate path is considered as a path that is compatible with the recent GUI navigation history. In other words, the candidate paths may be considered as those paths the user is allowed to still navigate in view of the current context. However, there might be further limitations as described below. Possible candidate target GUI screens should be found on candidate paths only

Furthermore, to provide a short cut link, user habits are to be considered. Therefore, identifying candidate paths is also based on GUI statistics acquired by earlier visits of the GUI (by the current user or, in some examples, by any user). The GUI statistics includes information about typical navigational user behaviour. For example, this may allow to reduce the number of candidate paths and/or to determine a ranking of preferred candidate paths. The GUI statistics regards paths that have been visited in earlier visits of the GUI; for example the GUI statistics may include information about how frequently a path has been navigated in earlier visits.

Furthermore, since the short cut link should provide a "real" short cut, i.e. should enable the user to skip (i.e. directly bypass) at least one next GUI screen, the target GUI screen may be a screen behind a next GUI screen from the perspective of the current GUI screen. The short cut link, or in some embodiments multiple short cut links, are displayed in the current GUI screen and provide a link to a respective target GUI screen. Activating the short cut link causes the GUI, e.g. by the electronic device, to (directly) switch from the current GUI screen to the target GUI screen and, thereby, enables the user to skip at least one next GUI screen.

Some embodiments further include preloading at least one target GUI screen, e.g. for reducing the response time to display a target GUI screen when the user activates a short cut link. Preloading refers to loading a target GUI screen before the user activates a short cut link that corresponds to the target GUI screen. For example, preloading a target GUI screen includes storing the target GUI screen in a cache memory. Preloading the target GUI screen may include reading the layout of the target GUI screen from the GUI definition.

Hence, the methods and devices described herein enable to propose short cut links based on a current context and the GUI statistics. This means that if a new user starts using the GUI for the first time, the user will not have propositions based on his own habits yet; however in some embodiments described below the user may benefit from the propositions based on other users' habits (having earlier visited the GUI) and/or propositions specific to his role or a category or a group the user is associated with. In some embodiments, determining the target GUI screen may include, e.g. based on a cost function, balancing the probability that a user may use the short cut link to jump to the target GUI screen with the number of skipped GUI screens. Indeed even if it is less probable that a user will decide for a long range jump using a short cut link, a short cut link that allows skipping more GUI screens and/or user inputs for navigating through the GUI may be more valuable. Correspondingly, the cost function may be based on the number of GUI screens skipped when activating the short cut link and a probability of the target GUI screen having been visited in earlier visits of the GUI in view of the current context. Short cut link proposition(s) may be dependent on the context, e.g. the current GUI screen, a flow and/or a scenario the user is currently in. As described further below, a flow includes at least one path associated with a task and a scenario includes at least two or more flows to enable a user to perform a complex task which includes two or more tasks.

The GUI may enable the user to perform at least one task (e.g. by using the electronic device). Example tasks might be creating a reservation or a booking of a travel, a hotel, a flight or a car, for example. The GUI may provide different ways and/or different options for performing a task. Therefore, multiple paths through the GUI may be associated with the task. In other words, the GUI may provide multiple paths (i.e. different sequences of GUI screens to be sequentially visited by the user) to perform the same task.

For example, the task of booking a hotel may include booking a hotel for a single person or, alternatively, booking the hotel for two persons. Therefore, the GUI may include a flow for performing the task of booking a hotel. The flow includes a first path including at least a GUI screen for entering a single person's data and a second path including at least two GUI screens, namely at least one GUI screen for each of the persons.

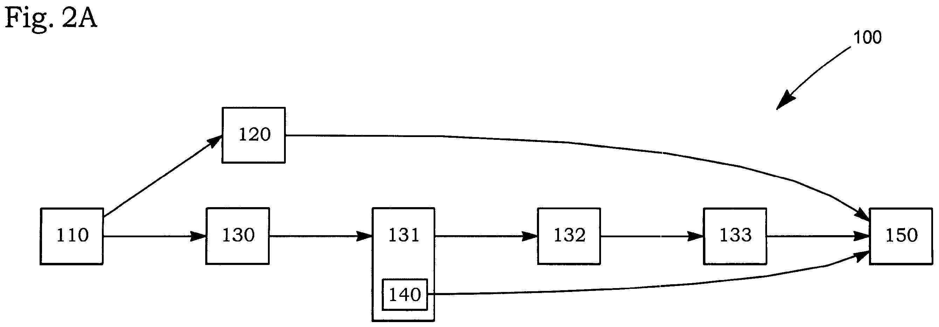

Referring now to Fig. 2A, a schematic diagram is presented that depicts an example flow 100 for booking the hotel. Staring from GUI screen 110 the user may either navigate along a first path to GUI screen 120 or along a second path to GUI screen 130. GUI Screen GUI 110 may provide an input field to enable the user to select whether he wants to book the hotel for a single person or for two persons.

By selecting "single person", the user navigates along a first path to GUI screen 120, which provides user input fields for entering a desired room category. After having filled in the required data into the user input fields of GUI screen 120, the user navigates to the (only possible) next GUI screen 121 for entering the period the user wants to stay at the hotel. Thereafter, the user may navigate to the (only possible) next GUI screen 150 for performing payment of the booked hotel.

By selecting "two persons" in GUI screen 110, the user navigates along a second path to GUI screen 130 which provides user input fields for entering a desired room category for the first person. As with the first path, the user may navigate to the next GUI screen 131 for entering the period the first person wants to stay at the hotel. Then, the user may navigate to the next GUI screen 132 to enter a desired room category for the second person and, thereafter, the user may navigate to the next GUI screen 133 for entering a period the second person wants to stay. By further navigating along the second path, the second path meets the first path in GUI screen 150 for performing payment. However, based on the GUI statistics the GUI "knows" from early visits of users that many times two persons may want to share a room. Therefore, the GUI provides a short cut link 140 in GUI screen 131 for skipping GUI screens 132 and 133. By activating the short cut link 140 the user may directly navigate to GUI screen 150 for payment. This enables the user to skip GUI screens 132 and 131. To summarize, flow 100 provides two paths to completely perform the task of booking a hotel. The two paths provide alternatives as regards the number of persons to book the hotel for. So much for Fig. 2A.

Another example task might be configuring a network router device (router). This task may to be performed by a network administrator. For example, the task may include configuring the router for a single sub-net only, or, alternatively, configuring the router for multiple virtual networks. Therefore, the GUI for the task of configuring the router may provide a first path including (inter alia) a GUI screen for entering, e.g. a single sub-net mask and a single gateway address, and a second path including (inter alia) at least two GUI screen for entering a first sub-net mask and a first gateway address in a first GUI screen and a second sub-net mask and a second gateway address in a second GUI screen, and/or a third path including (inter alia) a single GUI screens for entering at least two sub-net masks and gateway addresses, for example.

Another example task might be configuring a printer in an operating system of a computer. This task may to be performed by a computer administrator or by a computer user himself, for example. The task may include configuring a single paper cassette of a printer, or, alternatively, configuring multiple paper cassettes of the printer. Therefore, the GUI for the task of configuring the printer may provide a first path including (inter alia) a GUI screen for entering, e.g. a paper size and paper orientation of a single paper cassette, and a second path including (inter alia) at least two GUI screen for entering a first paper size and paper orientation in a first GUI screen and a second paper size and paper orientation in a second GUI screen, and/or a third path including (inter alia) a single GUI screens for entering a first paper size and paper orientation and a second paper size and paper orientation, for example.

In some embodiments, the GUI for performing a particular task has a single path only to perform this task, i.e. each GUI screen has exactly one next GUI screen. However, even in such embodiment, the short cut link may allow to skip one or more of the GUI screens when navigation along the path. Preferably, the GUI has multiple paths, which enables the user to navigate along different (alternative) paths through the GUI. In some embodiments, at least one path, preferably each path includes only a subset of all the GUI's screens available, i.e. the task can be concluded by the user without having to visit all GUI screens. In some embodiments, at least one path, preferably each path includes a respective sequence of GUI screens that is sufficient to completely perform a task, i.e. to perform the task from the beginning of the task to the task completion. Thus, each of at least two paths may on its own enable the user to completely perform the same task, e.g. booking a hotel; however, they may provide different options or functionalities to the user.

To perform a (complete) task, a flow of the GUI may be defined. A flow may include one or more paths associated with the task. In some embodiments, a flow includes all paths associated with the same task. For example, the multiple paths of the flow may provide alternative ways, i.e. different sequences of GUI screens to perform the task. Additionally or alternatively, one or more paths of the flow may provide options with regard to the task.

In some embodiments, each path on its own may enable the user to perform a task from the beginning of the task to the task completion. With regard to the previous hotel booking example, a flow for booking the hotel may include the first, second and third path, wherein each of these paths on its own enables the user to perform the booking in different ways, e.g. with varying booking, paying or delivery options. This correspondingly applies to the example tasks of configuring a router and configuring a printer.

In some embodiments, the GUI may include at least one scenario which includes at least two flows. A scenario may be considered as a combination or sequence of flows. The GUI may enable the user to perform a complex task including multiple single tasks based on a respective scenario. For example, a scenario may enable the user to book a trip. In this example, booking a trip is a complex task, e.g. including the single tasks of booking a flight, booking a hotel and booking a car. Correspondingly, the scenario of this example includes a first flow for booking the flight, a second flow for booking the hotel and a third flow for booking the car. Each of these flows may include one or more paths.

In some embodiments a current flow and/or a current scenario (i.e. a flow and/or a scenario a user currently visiting the GUI is currently navigating through) is (automatically) identified by the system. For example, if a scenario has been identified, user inputs may be recorded in a first flow and the recorded user inputs may be used for pre-filling input fields of a second flow of this scenario, since the first and second flow both are associated with the same complex task. For example, home address data of a user may be required for the task of booking the flight as well as for the task of booking the hotel and the car. Thus, in some embodiments the GUI may display some information that at least one next GUI screen is pre-filled. This enables the user to directly jump behind the pre-filled GUI screes by activating a short cut link if the user does not desire for any modifications within the pre-filled next GUI screen(s).

The GUI may provide more than one possible (directly adjacent) next GUI screen for a current GUI screen. This enables the user to branch at the current GUI screen to either proceed navigation with a first next GUI screen or a second next GUI screen. As regards paths, a first path may include the current GUI screen and the first next GUI screen, and a second path may include the current GUI screen and the second next GUI screen. However, which path the user will navigate depends on the user's action on the current GUI screen. For a current GUI screen, in response to a first (user) action, the GUI will switch to the first next GUI screen and in response to a second (user) action the GUI will switch to the second GUI screen different from the first GUI screen. In some embodiments, multiple different (user) actions may cause the GUI to switch to the same next GUI screen. Therefore, in some embodiments, at least two (different) sequences of (user) actions may result in the same path navigated through the GUI.

Paths may be explicitly described in a GUI definition. A path may include set of rules specifying for each GUI screen of the path a respective next GUI screens. Furthermore, the path may additionally include rules specifying for each pair of a current GUI screen and a next GUI screen at least one (user) action in response to which the GUI is to be triggered to switch from the respective current GUI screen to the respective next GUI screen.

However, in some embodiments, a path may be not (explicitly) included, e.g. predefined or pre-coded, in the GUI definition of a newly created GUI. For example, a GUI definition includes for each GUI screen information about (user) actions triggering switching to respective next GUI screens. Thus, the creator of the GUI is not required to consider (and explicitly define) each possible path through the GUI. Paths may be indirectly defined by rules for switching between GUI screens, e.g. in a GUI definition. Therefore, in the present description, any operation with regard to a path may be based on data implicitly and/or explicitly denoting the path in the GUI definition and/or in the GUI statistics and/or in the recent navigation history. Data explicitly denoting a path may be obtained by recording a sequence of GUI screens displayed in response to actions when a user navigates through the GUI. Additionally or alternatively, such data may be obtained from recordings of earlier visits of the GUI. Additionally or alternatively, such data may be obtained from rules for switching between GUI screens.

Preferably, a short cut link provides an "actual" short cut, which means that by activating the short cut link at least one next GUI screen after the current screen will be skipped. Therefore, in some embodiments, a path includes at least three GUI screens, namely a current GUI screen, a target GUI screen and a next GUI screen between the current GUI screen and the target GUI screen. Preferably, a path includes at least four GUI screens, namely a start GUI screen, the current GUI screen, a next GUI screen and a target GUI screen.

As to skipping GUI screens when navigating through the GUI, a user may not be required to visit each GUI screen of a path to completely perform a task. For example, when booking a hotel, the user may or may not wish to specify a particular room. Accordingly, the GUI may provide at least one short cut link for skipping at least one GUI screen. With regard to the previous example, if the user does not want to specify a particular room, he can skip, by clicking the short cut link, the GUI screens providing information about available rooms and/or providing user input fields for selecting one of the available rooms. This reduces the effort for and time of the user to complete the task as well as, for example, the computational resources of the electronic device required to process the user inputs for completing the task. Reducing the number of GUI screens visited for performing the task may also effect a reduction of network traffic in a client/server scenario, for example, if the GUI screens are retrieved from a remote web server.

As mentioned before, providing the short cut link is based on GUI statistics from one or more earlier visits of the GUI. For example, if a user has performed a task using a particular path in an earlier visit, the user probably will perform this task in the same way, i.e. using the same path in a later visit of the GUI. This information is gathered in the GUI statistics. The GUI statistics regard (earlier visited) paths of the GUI. However, in some embodiments, the GUI statistics does not (immediately) include any information about each possible path of the GUI. For example, before the very first visit of the GUI, the GUI statistics may even be empty. When a path of the GUI is navigated for the very first time, respective information representing the path may be added to the GUI statistics. In addition thereto, information about the frequency of a path having been navigated in earlier visits is may be added to the GUI statistics. This information may be updated each time a path is navigated. This enables the GUI to learn navigational user behaviour. A path for which the GUI statistics not (yet) includes any information may be assumed to have a value zero of its frequency of earlier visits.

One or more (additional) GUI screens may be added to the GUI definition and/or one or more (existing) GUI screens may be removed from the GUI definition, e.g. due to a further development or refinement of the overall GUI. Also the navigational behaviour of the GUI may be amended, i.e. existing paths may be added, removed or changed. In order to further re-use the information gathered so far by the GUI statistics as much as feasible, information with regard to paths that are not affected by this adaption of the GUI definition are kept in the GUI statistics, in some embodiments. Information with regard to an affected path may be emptied from the GUI statistics because the previous statistics related to the affected path became outdated. For example, the GUI statistics may include only information with regard to paths affected by adding/removing a GUI screen gathered after that point in time the GUI screen has been added to or removed from the GUI definition.

In some embodiments, a path is affected by the adding and/or removing of a GUI screen if the added/removed GUI screen is/was included in the sequence of GUI screens of the path. For example, all paths passing the added/removed GUI screen are affected paths, i.e. information with regard to these paths may be emptied from the GUI statistics.

In some embodiments, a path including a direct predecessor GUI screen of an added/removed GUI screen is an affected path. A direct predecessor GUI screen of an added/removed GUI screen is a GUI screen that is arranged directly before the added/removed GUI screen along the sequence of GUI screens of one or more (possibly still further) paths. In other words, in these embodiments, a path may be affected by adding/removing a GUI screen even if it does not include the added/removed GUI screen, but includes a GUI screen which is a predecessor of the added/removed GUI screen along another path (that includes the added/removed GUI screen). This enables considering that a user's navigational behaviour may change when navigating in the vicinity of added/removed GUI screen; in this example, when navigating through the predecessor GUI screen of an added/removed GUI screen.

In some embodiments, a path including a second order, a third order or, for example, a higher order predecessor GUI screen of an added/removed GUI screen is defined to be an affected path. A second order predecessor GUI screen is a GUI screen with one further GUI screen in between itself and the added/removed GUI screen along the sequence of GUI screens of a path of the GUI. Correspondingly, a third order predecessor GUI screen is a GUI screen with two further GUI screens in between itself and the added/removed GUI screen along the sequence of GUI screens of a path of the GUI.

Maintaining the GUI statistics for paths which are not particularly affected by a change of the GUI (e.g. due to an addition or removal of GUI screens) in this manner allows continued dynamic offering of useful short-cut links even in such situations of a GUI change, whereas a deletion of all GUI statistics would necessitate a gathering of new GUI statistics until useful short-cut links can be calculated and displayed again.

For determining appropriate target GUI screens, the knowledge about the user behaviour contained in the GUI statistics as well as the current (navigational) context of the user in his current visit are considered. In the current visit, the user may or may not have already navigated through some of the GUI screens before he arrived at a current GUI screen. This information is gathered by the recent navigation history, which is generated, e.g. by the electronic device, for the user's current visit of the GUI. The recent navigation history may include (at least) the current GUI screen and (possibly) one or more, preferably all of the GUI screen(s) visited so far in the current visit of the GUI. In other words, the recent navigation history may include a sub-sequence or the (complete) sequence of GUI screens the user has visited in his current visit of the GUI. Therefore, the recent navigation history can be treated as a sub-path of the GUI including at least the current GUI screen and, optionally, including one or more GUI screens in front of the current GUI screen. The recent navigation history may represent the current context of the user navigating through the GUI. The recent navigation history may be reset (e.g. emptied) on the beginning of a visit of the GUI and/or when a start GUI screen becomes the current GUI screen. The recent navigation history may be reset when navigating to a next flow and/or to a next scenario.

Not every GUI screen constitutes an appropriate target GUI screen. Since the short cut link preferably provides a short cut with respect to a current path, the target GUI screen shall be found on the same path which also includes the current GUI screen. Therefore, a candidate path is identified based on the recent navigation history. Identifying a candidate path includes determining whether a path includes the recent navigation history as a sub-path. In other words, the sequence of GUI screens of a candidate path may include the sequence of GUI screens of the recent navigation history as a sub-sequence. This means that the user may not leave the path he has navigated so far by activating a short cut link.

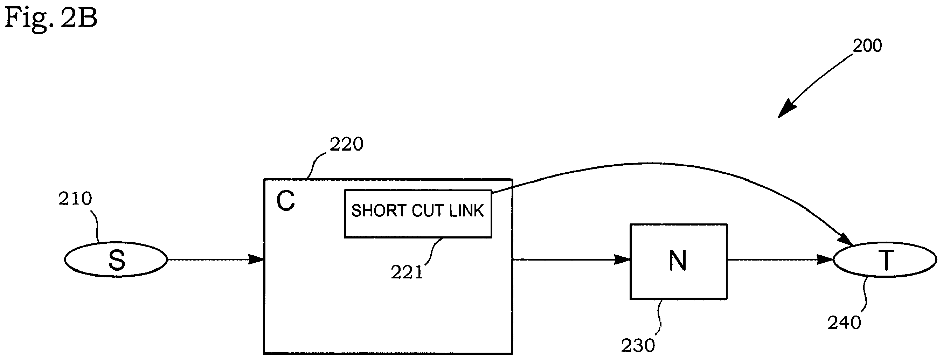

As described before, a short cut link should provide an "actual" short cut, which means that by using the short cut link at least one next GUI screen after the current screen should be skipped. Therefore, a target GUI screen is a GUI screen after the next GUI screen(s) along a candidate path. This is illustrated in Fig. 2B showing a single path 200 of a GUI. The path 200 includes a sequence of GUI screen: a start GUI screen 210, a current GUI screen 220, a next GUI screen 230 and a target GUI screen 240 in that order. Starting from the start GUI screen 210 the user may navigate along the path 200 and will arrive at the current GUI screen 220 next. According to the sequence of GUI screens of the path 200, along the direction of the path 200, the next GUI screen 230 is (directly) behind the current GUI screen 220. The GUI provides a short cut link 221 displayed in the current GUI screen 220. The short cut link points to the target GUI screen 240. This enables the user to directly navigate to the target GUI screen 240 from current GUI screen 220 and, thereby, skipping the next GUI screen 230. However, the user may also arrive at the target GUI screen without using the short cut link 221, namely by navigating along the path 220 screen-by-screen. So much for the example of Fig. 2B.

In some embodiments, a minimum number of next GUI screen(s) to be skipped by the short cut link is required. The term "after" relates to the sequence of GUI screens of the candidate path. Therefore, identifying candidate paths may include determining whether the sequence of GUI screens of a path includes at least two or at least the minimum number of next GUI screens plus one behind the current GUI screen. In response thereto, the path is considered as (possible) candidate path; otherwise this path will be not identified as candidate path.

A candidate path has might multiple candidate target GUI screens , when the candidate path has more than one GUI screen behind the next GUI screen(s). . Also multiple candidate paths might have been identified by the system. Therefore, the number of candidate target GUI screens may be larger than a maximum number of short cut links to be displayed in the current GUI screen. Therefore, determining the target GUI screen includes selecting a GUI screen out of multiple candidate target GUI screens. This selection is based on the cost function, the minimum number of next GUI screens to be skipped and/or on the GUI statistics. For example, selecting the a GUI screen out of the candidate target GUI screens may be based on weights of the candidate path, cumulated weights based on the weights of each candidate path that include a respective candidate target GUI screen and/or probabilities included in the GUI statistics and associated with respective candidate paths and/or respective candidate target GUI screens.

Determining the target GUI screen may be based on distances between the current GUI screen and candidate target GUI screens along the candidate path(s). A distance between two GUI screens may correspond to the number of possible further GUI screens between the two GUI screens increased by one. For example, the longer the distance between a candidate target GUI screen and the current GUI screen is the more preferably the candidate target GUI screen is determined as target GUI screen. This enables skipping a larger number of next GUI screens by the short cut link.

If a target GUI screen has been determined, the short cut link might be set to point to this target GUI screen. This means that a short cut link is configured to induce, e.g. by the electronic device, switching the GUI to the determined target GUI screen in response to a user activating the short cut link. In some embodiments, one or more short cut links may be displayed in a current GUI screen. However, in some GUI screens one short cut link may be displayed, in some other GUI screens multiple short cut links may be displayed and in still some other GUI screen not any short cut link may be displayed. Thus, a number of short cut links may vary between different GUI screens being a current GUI screen. The user may choose between multiple target screens and, thereby, directly jump to different target screens.

The GUI may include non-skipable GUI screens. Therefore, determining the target GUI screen may include determining whether a non-skipable GUI screen is between the current GUI screen and a candidate target GUI screen along a candidate path. In response to a non-skipable GUI screen being between the current GUI screen and a possible candidate target GUI screen, the short cut link is prevented from pointing to this candidate target GUI screen. Alternatively, this possible candidate target GUI screen may be considered as not being a candidate target GUI. Correspondingly, any GUI screen that is behind a non-skipable GUI screen along a path may be excluded from being determined as a target GUI screen.

A short cut links may be activated by clicking on an icon or text string representing the short cut link in the current GUI screen to the target GUI screen being associated with the short cut link. In some embodiments, a short cut link may be activated by a (user) action, e.g. by the user pressing a certain key or combination of keys of a keyboard. A short cut link may be activated by different alternative user actions, e.g. one or more actions based on pressing key(s) and/or based on clicks by a mouse and/or a touch screen. This provides the user alternative ways of activating the short cut link, i.e. to jump the respective target GUI screen.

The GUI statistics may include weights of (complete) paths, wherein each path may be associated with its own weight. The weight of a path may be based on statistical information about the frequency the path was navigated in earlier visits. The weight of a path may be based on a probability that a user may navigate the respective path. For example, the weight of a path may be increased each time the path was navigated by a user. The weight of the paths may correspond to the frequency of the paths being navigated in earlier visits.

As described before, in some embodiments the paths may be not explicitly defined in a GUI definition. In some embodiments, the GUI statistics includes information about paths, preferably about each path navigated by a user in an earlier visit of the GUI. The GUI statistics may include the path's sequence of GUI screens, e.g. this sequence may be stored as a data entry associated with the path in a data base. The GUI statistics may regard the paths visited by users in earlier visits of the GUI regardless of individual users, i.e. without distinguishing between individual users. Alternatively, the GUI statistics may regard individual user statistics, user role statistics, user category statistics and/or user group statistics. User roles may be administrators, implementer, standard user and/or developer or anonymous user, for example. User categories may be based on income, family status, age and/or gender, for example. Correspondingly, the GUI statistics may regard the weights of the paths at a level of individual users, at the level of user's roles, at the level of user categories and/or at the level of user groups. Therefore, all embodiments described herein with regard to "users" correspond with further embodiments which are to be understood with regard to "individual users" and vice-versa. The information included in the GUI statistics and/or in the recent navigation history may be associated with a user profile. For example, the GUI may include multiple profiles, which may be associated with individual users. This allows to differentiate between the habits of different users.

In some embodiments, the GUI may include multiple individual GUI statistics. For example, some of the individual GUI statistics may be associated with respective individual users. One of the individual GUI statics may be associated with a generic user profile if a user has not been identified. Some of the individual GUI statistic may be associated with individual roles, categories and/or groups of users. This allows to gather individual behaviour of the individual users, user roles, user categories and/or user groups. For example, a first GUI statistics may be associated with a first user and a second GUI statistics may be associated with a second user.

At least two paths, preferably each path of the GUI may include one or multiple mandatory GUI screen(s) in common. Thus, regardless which one of the paths a user navigates, he will be always displayed at least the mandatory GUI screen(s). This may enables the GUI to force users to visit the mandatory GUI screen(s) for (completely) performing the task.

In some embodiments at least two paths, preferably each path of the GUI may include the same start GUI screen as a first GUI screen of the paths' sequences of GUI screens. Thus, when a user visits the GUI, the user may always be displayed the (same) start GUI screen first.

In some embodiments, the paths of the GUI may be unique. For example, any two paths may differ in at least one GUI screen. They may have a different number of GUI screens and/or at least on GUI screen is included in only one of the two paths but is not included in the other one. Two different paths may include the same sub-path, i.e. they may have at least one (sub-) sequence of GUI screens in common. At least one, preferably each path may include only a (real) subset of the multiple GUI screens. To provide, for example, real alternatives to the user to perform a task, not any path (of a flow) may include all GUI screens. In some embodiments, paths are always to be considered as complete paths, i.e. not any path may be fully included (as a sub-sequence / sub-path) in another path. A path may include at least one GUI screen multiple times, i.e. a path's sequence of GUI screens may contain one or more GUI screen(s) several times. This allows that paths may have loops, i.e. a path's sequence of GUI screens may contain at least one directly adjacent repetition of the same sub-sequence of GUI screens.

The GUI may capture information about a user input when operating the GUI. For example, the GUI may include a control program to be performed by a processor for operating the GUI. For example, the control program may be implemented by JavaScript to carry out the above described methods. The control program may be included in the GUI definition document, e.g. as JavaScript included in an HTML document. In some other embodiments, the control program may be maintained separate to the GUI definition document, e.g. as an executable file including machine code to be directly carried out by a processor.

When executed by the processor the control program may capture the information about the user input. For better readability, expressions of the type "the GUI doing ..." are to be understood as "the control program of the GUI comprises program code stored on the non-transitory computer-readable storage medium that, when executed by the processor, causes the processor to do ...". For example, the previous expression "The GUI may capture information about a user input when operating the GUI." is to be understood as "The control program of the GUI comprises program code stored on the non-transitory computer-readable storage medium that, when executed by the processor, causes the processor to capture information". This correspondingly applies to the GUI statistics.

User input with regard to navigating through the GUI is also referred to as (user) "action". Thus, the term "actions" means user input that cause the GUI, e.g. by the electronic device, to switch from a first GUI screen to a second GUI screen, including switching between flows or scenarios in some embodiments. User actions may include clicking any icons in a current GUI screen, e.g. a next, a previous or a home button displayed in the current GUI screen to navigate to the next, previous or start GUI screen, for example. User actions may also include user input in a user input field, e.g. entering some information into a text field and pressing an enter-key or selecting a radio button, if this user input causes the electronic device to switch to another GUI screen. User actions may also include pressing a key or a combination of keys or a series of keys on a user keyboard.

The GUI may record some or all user input during a user's visit of the GUI. In some embodiments, the GUI may record a sequence of user actions. Preferably, the GUI may record each user action during a user's visit of the GUI. In some embodiments, the GUI statistics further regards user inputs or user actions. This provides information about the user's behaviour when navigation through the GUI and/or data entered by the user. For example, the GUI statistics may regard how often a user has booked a certain hotel, and/or probabilities of selecting certain flight(s) and/or train(s) and/or car(s) for traveling in general or for a certain trip. As a still further example, the GUI may regard sequences of (user) actions performed by a user in earlier visits to navigate along a path. For a respective path, the GUI may include one or more sequences of user actions.

In some embodiments, a path further includes at least one sequence of user actions. A sequence of user actions may include a user action for each pair of two (directly adjacent) consecutive GUI screens. This allows for identifying one of multiple paths, even if the user has not yet navigated a complete path and if the GUI screens visited by the user so far are included in each of the multiple paths. As described before, multiple user actions may be associated with the same next GUI screen, i.e. the user may navigate from the current GUI screen to the (same) next GUI screen by either performing a first user action or a second user action. Therefore, a path may include more than one sequence of user actions.

However, some embodiments consider the history of user actions the user performed during the current visit so far. For example, in response to the same user action the GUI may switch either to a first next GUI screen or to a second GUI screen. Whether the GUI switches to the first or to the second GUI screen may depend on at least one previous user action performed by the user before arriving at the current GUI screen and/or on user input entered in the current GUI screen or any preceding GUI screen.

As described before, a scenario includes at least two flows for enabling the user to perform at least two tasks by using the GUI. Therefore, a scenario may include the GUI screens of all paths of the flows of the scenario. In some embodiments, a GUI may include at least two scenarios. Each scenario may include a subset of the multiple GUI screens, which subsets may be disjunctive in some embodiments.

When a user navigates through the GUI, the user may toggle between different paths, flows and/or scenarios: The GUI may provide at least one link in the current GUI screen, in response to activating one of the at least one links, the GUI will switch to a GUI screen of a different path, of a different flow and/or of a different scenario with regard to the current GUI screen. These links may be considered as further optional links in addition to the navigation by user actions described before. Determining the target GUI screen may be based on a probability that the user toggled the path, the flow and/or the scenario in earlier visits for the current context. This probability may be gathered by the GUI statistics during earlier visits of the user.

As described before, the current context (including the current path, the current flow and the current scenario) of the user navigating through the GUI is reflected by the recent navigation statistics. However, in some situations, e.g. when the user just entered the GUI, it may not yet possible to exactly determine a current flow and/or a current scenario. Therefore, for providing a short cut link, the GUI may apply the following scheme: If neither the current scenario and nor the current flow has been identified, the target GUI screen may be selected from the GUI screens of the most common scenario according to the GUI statistics. If the current flow has been identified, but not the current scenario, the target GUI screen may be selected from the GUI screens of the current flow. If the current flow and the current scenario have been identified by the system, the target GUI screen may be selected from the GUI screens of the current flow of the current scenario.

The user may enter user input to a GUI screen which might be coherent to different flows of a scenario. For example, in a scenario of booking a trip, a user may book in a first flow an outward flight. Then, in a second flow, the user may book a hotel. Then, in a third flow, the user may book an inward flight. Thus, the user performs three task by using three flows of one scenario of the GUI. However, each task may require the same user inputs, e.g. the user's name, address, date of birth and the like. Such information may be gathered by the GUI statistics, e.g. by the GUI statistics storing user inputs from earlier visits of the GUI and/or earlier visits of particular flows. Thus, when the user completed the first task and navigates to the second flow, the GUI statistics is already aware of the user inputs within the first flow. In some embodiments, the GUI may reuse user inputs gathered by the GUI statistics to prefill GUI screens. In some embodiments, the GUI may reset the gathered user inputs when a new scenario is detected.

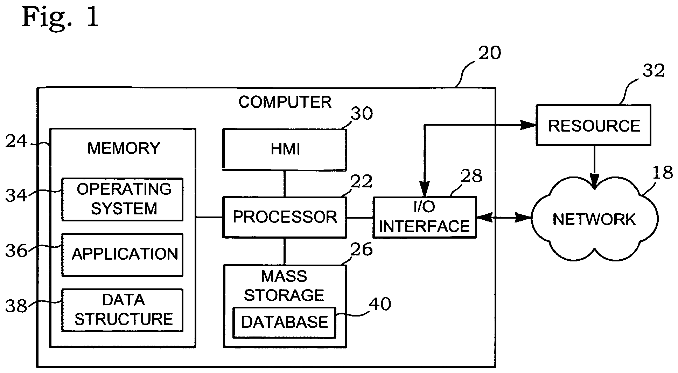

Referring now to FIG. 1, an electronic device in accordance with an embodiment of the invention may be implemented by computing device or systems, such as exemplary computer 20. The computer 20 may include a processor 22, a memory 24, a mass storage memory device 26, an input/output (I/O) interface 28, and a Human Machine Interface (HMI) 30. The computer 20 may also be operatively coupled to one or more external resources 32 via the network 18 or I/O interface 28. External resources may include, but are not limited to, computers, servers, databases, mass storage devices, peripheral devices, cloud-based network services, or any other suitable computer resource that may be used by the computer 20.

The processor 22 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 24. Memory 24 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 26 may include data storage devices such as a hard drive, optical drive, tape drive, non-volatile solid state device, or any other device capable of storing information.

Processor 22 may operate under the control of an operating system 34 that resides in memory 24. The operating system 34 may manage computer resources so that computer program code embodied as one or more computer software applications, such as an application 36 residing in memory 24, may have instructions executed by the processor 22. In an alternative embodiment, the processor 22 may execute the application 36 directly, in which case the operating system 34 may be omitted. One or more data structures 38 may also reside in memory 24, and may be used by the processor 22, operating system 34, or application 36 to store or manipulate data.

The I/O interface 28 may provide a machine interface that operatively couples the processor 22 to other devices and systems, such as the network 18 or external resource 32. The application 36 may thereby work cooperatively with the network 18 or external resource 32 by communicating via the I/O interface 28 to provide the various features, functions, applications, processes, or modules comprising embodiments of the invention. The application 36 may also have program code that is executed by one or more external resources 32, or otherwise rely on functions or signals provided by other system or network components external to the computer 20. Indeed, given the nearly endless hardware and software configurations possible, persons having ordinary skill in the art will understand that embodiments of the invention may include applications that are located externally to the computer 20, distributed among multiple computers or other external resources, or provided by computing resources (hardware and software) that are provided as a service over the network 18, such as a cloud computing service.

The HMI 30 may be operatively coupled to the processor 22 of computer 20 in a known manner to allow a user to interact directly with the computer 20. The HMI 30 may include video or alphanumeric displays, a touch screen, a speaker, and any other suitable audio and visual indicators capable of providing data to the user. The HMI 30 may also include input devices and controls such as an alphanumeric keyboard, a pointing device, keypads, pushbuttons, control knobs, microphones, etc., capable of accepting commands or input from the user and transmitting the entered input to the processor 22.

A database 40 may reside on the mass storage memory device 26, and may be used to collect and organize data used by the various systems and modules described herein. The database 40 may include data and supporting data structures that store and organize the data. In particular, the database 40 may be arranged with any database organization or structure including, but not limited to, a relational database, a hierarchical database, a network database, or combinations thereof. A database management system may be provided by a computer software application executing as instructions on the processor 22. This database management system may be used to access the information or data stored in database records in response to a query. The query may be dynamically determined and executed by the operating system 34, other applications 36, or one or more modules.

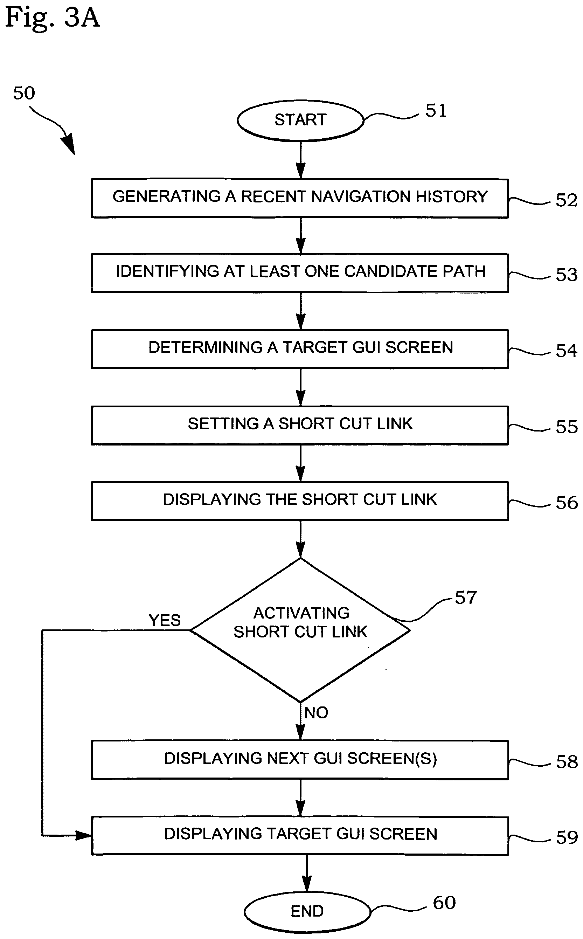

Referring now to FIG. 3A, a flow chart is presented that depicts a process 50 that may be performed by the computer 20 in accordance with an embodiment of the invention. To perform the process 50, the computer 20 is configured to display GUI screens of the GUI by switching the GUI from a current GUI screen to a next GUI screen out of multiple GUI screens of the GUI. This switching is performed in response to a user action, i.e. a user input which triggers the switching. This enables a user to navigate through the GUI, i.e. through the GUI screens.

Starting from block 51, in block 52, the process 50 may generate a recent navigation history in a current visit of the GUI. The recent navigation history may be stored in the database 40 and/or in the resource 32, for example. The recent navigation history includes information about the current GUI screen and potentially previous GUI screens displayed to the user in the current visit of the GUI so far. Therefore, the recent navigation history includes the information about a sub-path including the sequence of the GUI screens already visited by the user in the current visit of the GUI.

For example, the recent navigation history may further be based on the user inputs or (only) the user actions performed by the user in the current visit. The recent navigation history may include data representing a sequence including each user input or each user action performed by the user from the beginning of navigating through the GUI in the current visit until up to now, i.e. including user inputs on the current GUI screen.

In some examples, as described already above, in response to adding a GUI screen or removing a GUI screen from the GUI definition, or a change in existing paths, navigation history with regard to any path thereby affected is removed from the GUI statistics in block 52, while the GUI statistics for paths that are not affected by the addition/removal of a GUI screen or path change are maintained.

In block 53, the process 50 may identify at (possible) candidate paths on the basis of the recent navigation history and the GUI statistics. Only paths for that the recent navigation history constitutes a sub-sequence are identified as candidate paths. Furthermore, only paths that are regarded by the GUI statistics may be identified as candidate paths in some embodiments.

The GUI statistics may be maintained in a database, e.g. stored in the database 40 or in the resource 32, for example. The GUI statistics are generated in earlier visits of the GUI and may include statistical information about each path ever navigated by a user before or by the current user. The GUI statistics may include a weight of each path. The weight may be based on the frequency of the respective path being navigated in earlier visits. The more often a path has been navigated through, the larger the weight might be, at least with regard to the weights of the other paths. For example, the sum of all weights of all paths regarded by the GUI may be normalized to a certain value, e.g. 1 or 100. In some embodiments, a path which has never been navigated before is not included in or regarded by the GUI statistics. In some other examples, the GUI statistics regard or include each (possible) path of the GUI. A weight of a path which has never been navigated may be assumed or set to zero. For example, initializing the GUI statistics may include for all paths of the GUI storing some information representing a respective path into a GUI statistics database and also storing a weight valued zero and associated with the path into the GUI statistics database. In some other examples, the GUI statistics may be generated dynamically in response to visits of the GUI. Correspondingly, each time a user navigates a path which is not (yet) regarded by the GUI statistics, the computer 20 may store some information representing this path into the GUI statistics database and may also store a weight valued zero (as an initial value) and being associated with the path into the GUI statistics database. For example, when a user navigates a path which is already regarded by the GUI statistics, the weight associated with that path may be increased (with regard to the weights of the other paths regarded in the GUI statistics). Thus, the GUI statistics includes information about the navigational behaviour of the users or the particular current user. The GUI statistics may regard the weights of the paths at a level of individual users, at the level of user's roles and/or at the level of user groups. In some embodiments, the computer 20 may provide a respective GUI statistic for each respective user, e.g. a first GUI statistics associated with a first user and a second GUI statistics associated with a second user and so on. These multiple GUI statistics may be stored on the mass storage 20 or the resource 32 as one single database or as multiple databases each being associated with a (particular) user and including one GUI statistics associated with that user.

In block 54, the process 50 may determine a target GUI screen. Determining the target GUI screen may be limited to such GUI screens which are included in candidate paths. A candidate path may be a path which includes the recent navigation history as a sub path, includes at least one next GUI screen after the current GUI screen, and includes at least one candidate target GUI screen after the at least one next GUI screen. In other words, a candidate path may include at least three GUI screens, namely the sequence of the current GUI screen, the next GUI screen (which may be skipped by using the short cut link) and the target GUI screen after the next GUI screen.

In block 55, the process 50 may set the short cut link to point to the determined target GUI screen. This means that the short cut link is configured, e.g. by the computer 20, in an appropriate manner to cause the computer 20 to switch the GUI to the determined target GUI screen in response to a user input activating the short cut link. The short cut link may include a reference to the determined target GUI screen. Thus, when activating the short cut link, the computer 20 may read the reference included in the short cut link and display the thereby referenced GUI screen as a next GUI screen. Thus, when navigating through the GUI, the user may activate, e.g. by clicking an icon representing the short cut link in the current GUI screen, the short cut link and, thus "jump" directly to the target GUI screen skipping the next GUI screen(s) between the current GUI screen and the target GUI screen. However, to enable the user to easily take the short cut provided by the short cut link, in block 56, the process 50 may display the short cut link in the current GUI screen. The short cut link may be displayed to the user, e.g. as an icon. In block 57, the user can activate the short cut link by a respective user action. In response thereto, the GUI displays, in block 59, the target GUI screen and, thereby skipping at least one next GUI screen. Otherwise, i.e. in response to not having activated, in block 57, the short cut link, in block 58, the user may navigate through the at least one next GUI screen(s). Finally, after having navigated through the at least one next GUI screen(s), in block 59, the target GUI screen will be displayed, as the user will also arrive at the target GUI screen by taking the long route without activating the short cut link in block 57. The flow according to Fig. 3A ends in block 60.

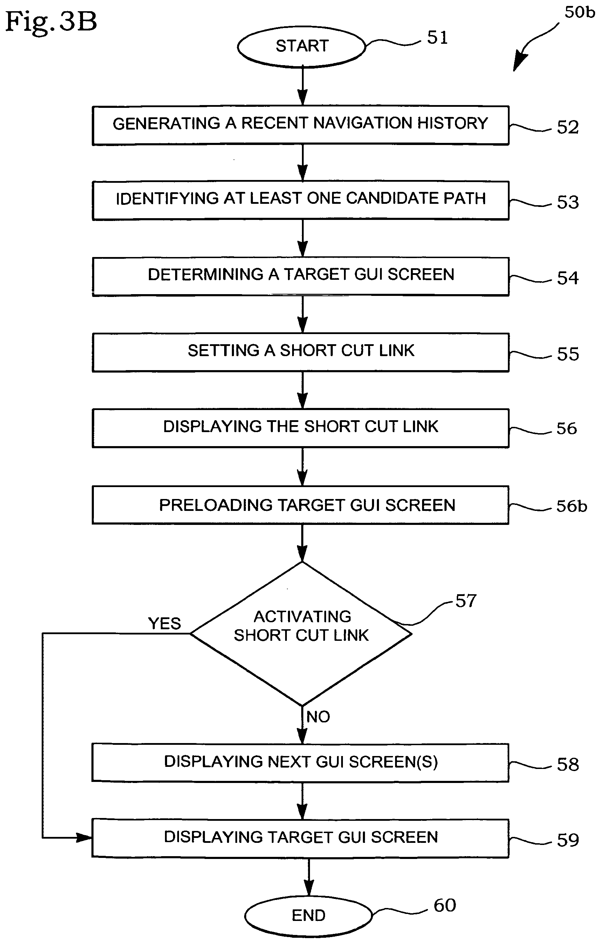

A flow chart presented in Fig. 3B corresponds to that depicted in Fig. 3A. However, in addition to the process 50 of Fig. 3A, the process 50b further includes, in block 56b, preloading the target GUI screen determined in block 54 to a memory (such as memory 24) of the computer 20. In this way, potential activating the target GUI screen by the user is anticipated with the effect that displaying the target GUI screen in response to its actual activation by using the short cut link is accelerated (compared to loading the target GUI screen only in response to short cut link activation). Insofar the target GUI screen to be preloaded depends on user input into the current GUI screen, at least those portions of the target GUI screen which are static and therefore independent from the user input into the current GUI screen are preloaded. The dynamic portions of the target GUI screen which dependent on the user input into the current GUI screen are then loaded upon activation of the short-cut link.

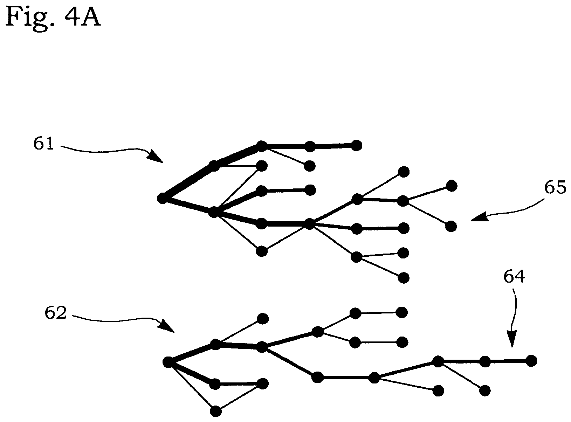

Referring now to FIG. 4A, the process 50 may further include providing a first flow 61 to the user for performing a first task by switching the GUI between GUI screens 65 of the first flow 61, and providing a second flow 62 to the user for performing a second task by switching the GUI between GUI screens 65 of the second flow 62. In this embodiment, the GUI includes at least two flows 61, 62 and, thus, enables the user to perform at least two tasks, e.g. booking a hotel and booking a flight.

As illustrated in Fig. 4A, GUI screens 65 may be represented by nodes of a graph. The paths 64 may be represented by the edges connecting the nodes associated with the path. Each path may include (the same) start GUI screen represented by the root node of the graph. For completely performing a task, the user has to navigate from the root node to a leave of the graph (i.e. an outer most node opposite to the root node). Thus, as can be seen in FIG. 4A, the flows 61, 62 provide many ways to perform the tasks, since each path of a flows may be considered as one individual way to perform the task. The weights of a path may be represented by the thickness of the edges.

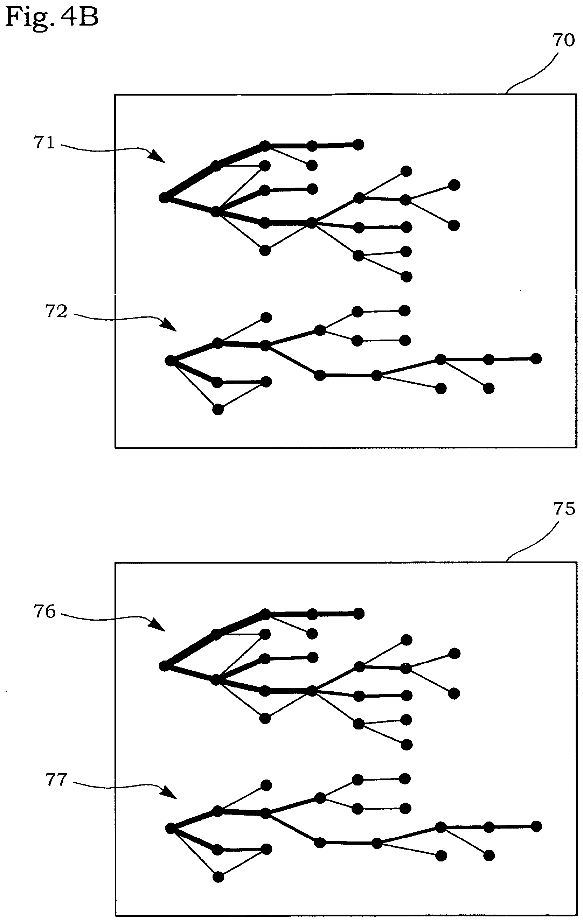

Referring now to FIG. 4B, the process 50 may further include providing a first scenario 70 to the user for performing a first set of task and providing a second scenario 75 to the user for performing a second set of tasks. Each scenario 70, 75 includes at least two flows 71, 72, 76, 77 each including multiple paths. The GUI including scenarios enables the user to perform a complex task. For example, scenario 70 enables the user to perform a complex task including the task of the flows 71 and 72. In some embodiments, scenarios 70, 75 may be isolated in that a user navigating through the GUI may be enabled to navigate through only that GUI screen(s), which are included in the flows of a particular scenario. However, in response to a scenario switching user input, the GUI may switch between multiple scenarios of the GUI. Switching between scenarios may include setting the current GUI screen to the start GUI screen of a respective first flow. In some embodiments, when switching between scenarios also the recent navigation history is reset, i.e. the recent navigation history will be set or modified to include a single GUI screen only, e.g. the start GUI screen. Even though Fig. 4B shows similar graphs of flows 71, 72, 76 and 77, any two flows may differ in their number of paths and the paths itself.

Referring now to FIG. 5, illustrating a graph representing eight GUI screens A - H and a start GUI screen S of a GUI totally including nine GUI screens. The GUI provides four paths including respective sequences of GUI screens as indicated by letters and associated with respective weights: (SACDF, 60%), (SBCDF, 10%), (SBCEG, 10%) and (SBCEH, 20%). The weights are included in the GUI statistics and represent the frequency of the respective path having been navigated in earlier visits of the GUI. The paths correspond to the only allowed sequences of GUI screens a user may navigate through the GUI. In other words, a user must not navigate from a first GUI screen to a second GUI screen, if the first and second GUI screens are not included in the same path.

Note that in some embodiments the GUI statistics includes weights of the paths rather than individual weights of the edges of the graph. Weights (or probabilities) of particular edges of the graph may be derived from the weights of the paths. For example, 70% of the users have been navigating the edge CD, whereas only 30% of the users navigated the edge CE. However, assuming the situation that a user navigated along SBC to the current GUI screen C, in this situation 25% of the users visited the next GUI screen D whereas 75% of the users visited next GUI screen E in earlier visits.

For illustrative purpose, it may be assumed that C is the current GUI screen. Under this assumption, the user may have been navigated to the current GUI screen C starting from the start GUI screen S in the current visit of the GUI so far. If only the information about the current GUI screen C were considered for providing a short cut link, each of the GUI screens F, G and H will be found as appropriate. However, a short cut link may be set more adequately as follows:

According to the graph, the user may have either taken the sub-path SAC or SBC so far. This information may be used in that the recent navigation history may either include SAC or SBC as a sequence of GUI screens visited so far in the current visit. Therefore, the recent navigation history allows both to consider the current GUI screen as well as where the user comes from, i.e. the sequence of GUI screens he has already visited in the current visit. In some embodiments, the recent navigation history may further include also user inputs or a sequence of actions the user has performed in his current visit so far. This allows for distinguishing between different possible histories SAC and SBC rather than considering only the current GUI screen C.

When the user comes from node A, i.e. if the user has navigated along SAC, he definitely navigated on the path SACDF so far, since this is the only possible path including the GUI screen A. In this situation, the GUI will prevent the user from further navigating to E, G or H, since E, G and H are not included in the path SACDF. Correspondingly, the only (possible) next GUI screen is screen D. This may be explained in more detail:

As to identifying candidate paths: This identifying may include determining whether a path includes the recent navigation history SAC as a sub-path. Thus, only the path SACDF remains as possible candidate paths in the present example. The remaining checks will not change anything in the present example: Identifying may also include determining whether a path is regarded by the GUI statistics. In the present example, the GUI statistics regards all (allowed) paths of the GUI. Thus, SACDF remains a candidate path. Furthermore, identifying may include determining whether a path has at least one further GUI screen after a next GUI screen. In the present example, the path SACDF has a further GUI screen F behind the next GUI screens D, and, thus, remains as a candidate path. Therefore, only the path SACDF is identified as candidate paths for current GUI screen C when the user comes from A.

As to determining a target GUI screen, firstly all possible candidate target GUI screens may be determined. In the present example, the only candidate GUI screen is screen F, because F is the only GUI screen which is included in a candidate path and, furthermore, is behind the next GUI screen D. Therefore, a short cut link may be set to point to the target GUI screen F and the short cut link may be displayed in the current GUI screen C. This enables the user to directly jump from the current GUI screen C to the target GUI screen F and, thereby skipping the next GUI screen D.

When the user comes from B, i.e. if the user has navigated along SBC, the GUI will allow the user to navigate to any of the GUI screens D, E, F, G and/or H. As to identifying candidate paths: As before, identifying may include determining whether a path includes the recent navigation history SBC as a sub-path. Thus, only SBCDF, SBCEG and SBCEH (but not SACDF) remain as possible candidate paths in the present example. Identifying may also include determining whether a path is regarded by the GUI statistics. As before, in the present example, the GUI statistics regards all paths of the GUI. Furthermore, identifying may include determining whether a path has at least one further GUI screen after a next GUI screen. In the present example, the paths SBCDF, SBCEG and SBCEH have further GUI screens F, G, H behind the next GUI screens D, E. Therefore, the paths SBCDF, SBCEG and SBCEH are identified as candidate paths.

As to determining a target GUI screen, firstly all possible candidate target GUI screens may be determined. In the present example, the GUI screens F, G H are candidate target GUI screens as they are included in candidate paths and, furthermore, they are behind next GUI screens D, E. Therefore, to provide a short cut link, one of the possible candidate target GUI screens may be selected. This selection may be based on the GUI statistics and/or on the distance between the possible target GUI screens and the current GUI screen. In the present example, the distance is determined to have the value 2 for each possible target GUI screen F, G, H. However, based on the GUI statistics it can be found that in earlier visits users may have preferred in this situation (i.e. having navigated SBC so far) one of the possible target GUI screens. The weight of each of the paths SBCDF and SBCEG is 10%. However, the weight of the path SBCEH is larger, namely 20%. Thus, in earlier visits, in this situation users more often navigated to H than to F or G. Therefore, H may be determined as the target GUI screen, and, thus, a short cut link may be set to point to this target GUI screen H. The short cut link may be displayed in the current GUI screen C. This enables the user to directly jump from the current GUI screen C to the target GUI screen H and, thereby skipping the next GUI screen E.

It should be noted that in this situation, three possible target GUI screens were determined. In some further embodiments, at least one further short cut link may be provided, which may point to F or G, for example. For example, if multiple (possible) candidate target GUI screens were determined, at least to some of them may be pointed to by respective short cut links.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. The invention is only limited by the scope of the appended claims.

## Claims

1. A method of providing a short cut link (221) in a graphical user interface, GUI, of an electronic device (20) for skipping at least one of multiple GUI screens based on GUI statistics from an earlier visit of the GUI,
wherein the GUI statistics include information representing at least one path and information about a frequency the at least one path has been navigated in earlier visits, wherein a path comprises a sequence of GUI screens to be sequentially visited by a user;
wherein the electronic device is configured to display the multiple GUI screens by switching the GUI from a current GUI screen (220) to a respective next GUI screen (230) out of the multiple GUI screens in response to a user action and according to predefined GUI navigation definitions, thereby enabling a user to navigate through the GUI screens;
the method comprising:
- generating (52), by the electronic device (20), a recent navigation history in a current visit of the GUI, based on the current GUI screen (220) and previous GUI screens displayed in the current visit of the GUI;
- identifying (53), by the electronic device (20), at least one candidate path, wherein the at least one candidate path is a path allowed according to the GUI navigation definitions, represented in the GUI statistics, and for which the recent navigation history is a sub-sequence;
- determining (54), by the electronic device (20), one or more candidate target GUI screens, wherein each candidate target GUI screen is a GUI screen after a respective next GUI screen (230) for the current GUI screen (220) along the at least one candidate path, wherein, when a candidate path among the at least one candidate path has more than one GUI screens after the next GUI screen in the candidate path, the candidate path has multiple candidate target GUI screens;
- selecting a target GUI screen out of the one or more candidate target GUI screens based on a cost function, a minimum number of next GUI screens to be skipped and/or on the GUI statistics;
- setting (55), by the electronic device (20), the short cut link (221) to point to the target GUI screen to cause the electronic device (20) to switch the GUI to the determined target GUI screen in response to a user activating the short cut link (221);
- displaying (56), by the electronic device, the short cut link (221) in the current GUI screen (220); and
- in response to adding a GUI screen to the GUI or removing a GUI screen from the GUI, removing all paths of the GUI which are affected by the adding and the removing, respectively, and maintaining all GUI statistics on paths which are not affected by the adding or the removing, respectively.

2. The method of claim 1, further comprising adding, by the electronic device (20), a path to the GUI statistics by gathering a sequence of GUI screens displayed in response to the user navigating through the GUI in the current visit of the GUI.

3. The method of claim 1, wherein the GUI statistics further comprise, for each path of the at least one path represented in the GUI statistics, a weight representing the frequency a respective path has been navigated in earlier visits.

4. The method of claim 3, wherein the weight of a path is increased each time a user navigates along said path.

5. The method of claim 3, wherein the GUI statistics regard the weight of a path at a level of individual users, at the level of user's roles and/or at the level of user groups.

6. The method of claim 1, wherein the GUI statistics further comprise sequences of gathered user inputs associated with the paths.

7. The method of claim 1, wherein the GUI statistics comprise first GUI statistics associated with a first user and second GUI statistics associated with a second user.

8. The method of claim 1, wherein a first flow comprises a first subset of the multiple GUI screens and a second flow comprises a second subset of the multiple GUI screens;
wherein the method further comprises:
- providing the first flow to the user for performing a first task by switching the GUI between GUI screens of the first flow, and
- providing the second flow to the user for performing a second task by switching the GUI between GUI screens of the second flow.

9. The method of claim 1, wherein a first scenario comprises a first subset of the multiple GUI screens and a second scenario comprises a second subset of the multiple GUI screens;
wherein the method further comprises:
- providing the first scenario to the user for performing a first task by switching the GUI between GUI screens of the first subset, and
- providing the second scenario to the user for performing a second task by switching the GUI between GUI screens of the second subset.

10. Method of claim 19, further comprising: providing a link configured to switch, by the electronic device, the GUI between a GUI screen of the first scenario and a GUI screen of the second scenario.

11. An apparatus (20) providing a short cut link (221) in a graphical user interface, GUI, for skipping at least one of multiple GUI screens based on GUI statistics from an earlier visit of the GUI,
wherein the GUI statistics include information representing at least one path and information about a frequency the at least one path has been navigated in earlier visits, wherein a path comprises a sequence of GUI screens to be sequentially visited by a user;
the apparatus (20) comprising:
a processor (22);
a display (30) and
a memory (24) including program code that, when executed by the processor (22), causes the apparatus (20) to:
display the multiple GUI screens by switching the GUI from a current GUI screen (220) to a respective next GUI screen (230) out of the multiple GUI screens in response to a user action and according to predefined GUI navigation definitions, thereby enabling a user to navigate through the GUI screens;
generating (52) a recent navigation history in a current visit of the GUI, based on the current GUI screen and previous GUI screens displayed in the current visit of the GUI;
identifying (53) at least one candidate path, wherein the at least one candidate path is a path allowed according to the GUI navigation definitions, represented in the GUI statistics, and for which the recent navigation history is a sub-sequence;;
determining (54) one or more candidate target GUI screens, wherein each candidate target GUI screen is a GUI screen after a respective next GUI screen (230) for the current GUI screen (220) along the at least one candidate path, wherein, when a candidate path among the at least one candidate path has more than one GUI screens after the next GUI screen in the candidate path, the candidate path has multiple candidate target GUI screens;
selecting a target GUI screen out of the one or more candidate target GUI screens based on a cost function, a minimum number of next GUI screens to be skipped and/or on the GUI statistics;
setting the short cut link to point to the target GUI screen to cause the apparatus to switch the GUI to the determined target GUI screen in response to a user activating the short cut link;
displaying (56) the short cut link in the current GUI screen; and
removing, in response to adding a GUI screen to the GUI or removing a GUI screen from the GUI, all paths of the GUI which are affected by the adding and the removing, respectively, and maintaining all GUI statistics on paths which are not affected by the adding or the removing, respectively.

12. A computer program product for providing a short cut link in a graphical user interface, GUI, of an apparatus according to claim 11 for skipping at least one of multiple GUI screens based on GUI statistics from an earlier visit of the GUI,
the computer program product comprising program code when executed by the apparatus of claim 1, causes the apparatus to perform the method of any one of claims 1 to 10.

## Patentansprüche

1. Verfahren zum Bereitstellen einer Abkürzungsverknüpfung (221) in einer grafischen Benutzeroberfläche (GUI) eines elektronischen Geräts (20) zum Überspringen mindestens eines von mehreren GUI-Bildschirmen auf der Grundlage von GUI-Statistiken von einem früheren Besuch der GUI,
wobei die GUI-Statistiken Informationen enthalten, die mindestens einen Pfad und Informationen über die Häufigkeit, mit der der mindestens eine Pfad bei früheren Besuchen durchlaufen wurde, darstellen, wobei ein Pfad eine Folge von GUI-Bildschirmen umfasst, die von einem Benutzer nacheinander besucht werden;
wobei das elektronische Gerät (20) so konfiguriert ist, dass es die mehreren GUI-Bildschirme anzeigt, indem es die GUI von einem aktuellen GUI-Bildschirm (220) zu einem jeweiligen nächsten GUI-Bildschirm (230) aus den mehreren GUI-Bildschirmen in Reaktion auf eine Benutzeraktion und gemäß vordefinierten GUI-Navigationsdefinitionen umschaltet, wodurch ein Benutzer durch die GUI-Bildschirme navigieren kann;
das Verfahren umfasst:
- Erzeugen (52), durch das elektronische Gerät (20), eines jüngsten Navigationsverlaufs in einem aktuellen Besuch der GUI, basierend auf dem aktuellen GUI-Bildschirm (220) und vorherigen GUI-Bildschirmen, die in dem aktuellen Besuch der GUI angezeigt werden;
- Identifizieren (53), durch das elektronische Gerät (20), mindestens eines Kandidatenpfades, wobei der mindestens eine Kandidatenpfad ein Pfad ist, der gemäß den GUI-Navigationsdefinitionen erlaubt ist, der in den GUI-Statistiken dargestellt ist, und für den der jüngste Navigationsverlauf eine Teilsequenz ist;
- Bestimmen (54) eines oder mehrerer Kandidaten-Ziel-GUI-Bildschirme durch das elektronische Gerät (20), wobei jeder Kandidaten-Ziel-GUI-Bildschirm ein GUI-Bildschirm nach einem jeweiligen nächsten GUI-Bildschirm (230) für den aktuellen GUI-Bildschirm (220) entlang des mindestens einen Kandidatenpfads ist, wobei, wenn ein Kandidatenpfad unter dem mindestens einen Kandidatenpfad mehr als einen GUI-Bildschirm nach dem nächsten GUI-Bildschirm in dem Kandidatenpfad hat, der Kandidatenpfad mehrere Kandidaten-Ziel-GUI-Bildschirme hat;
- Auswählen eines Ziel-GUI-Bildschirms aus dem einen oder den mehreren Ziel-GUI-Bildschirmen auf der Grundlage einer Kostenfunktion, einer Mindestanzahl der nächsten zu überspringenden GUI-Bildschirme und/oder der GUI-Statistik;
- Einstellen (55) der Abkürzungsverknüpfung (221) durch das elektronische Gerät (20), so dass sie auf den Ziel-GUI-Bildschirm zeigt, um zu bewirken, dass das elektronische Gerät (20) die GUI in Reaktion auf die Aktivierung der Abkürzungsverknüpfung (221) durch einen Benutzer auf den bestimmten Ziel-GUI-Bildschirm umschaltet;
- Anzeigen (56) der Abkürzungsverknüpfung (221) auf dem aktuellen GUI-Bildschirm (220) durch das elektronische Gerät; und
- als Reaktion auf das Hinzufügen eines GUI-Bildschirms zu der GUI oder das Entfernen eines GUI-Bildschirms aus der GUI, Entfernen aller Pfade der GUI, die von dem Hinzufügen bzw. Entfernen betroffen sind, und Aufrechterhalten aller GUI-Statistiken über Pfade, die nicht von dem Hinzufügen bzw. Entfernen betroffen sind.

2. Verfahren nach Anspruch 1, außerdem umfassend das Hinzufügen eines Pfades zu den GUI-Statistiken durch das elektronische Gerät (20), indem eine Sequenz von GUI-Bildschirmen erfasst wird, die als Reaktion auf die Navigation des Benutzers durch die GUI beim aktuellen Besuch der GUI angezeigt werden.

3. Verfahren nach Anspruch 1, wobei die GUI-Statistiken außerdem für jeden Pfad des mindestens einen in den GUI-Statistiken dargestellten Pfades eine Gewichtung umfassen, die die Häufigkeit darstellt, mit der ein entsprechender Pfad bei früheren Besuchen durchlaufen wurde.

4. Verfahren nach Anspruch 3, wobei das Gewicht eines Pfades jedes Mal erhöht wird, wenn ein Benutzer entlang des Pfades navigiert.

5. Verfahren nach Anspruch 3, wobei die GUI-Statistik das Gewicht eines Pfades auf der Ebene einzelner Benutzer, auf der Ebene von Benutzerrollen und/oder auf der Ebene von Benutzergruppen berücksichtigt.

6. Verfahren nach Anspruch 1, wobei die GUI-Statistiken außerdem Sequenzen von gesammelten Benutzereingaben umfassen, die mit den Pfaden verbunden sind.

7. Verfahren nach Anspruch 1, wobei die GUI-Statistiken erste GUI-Statistiken umfassen, die einem ersten Benutzer zugeordnet sind, und zweite GUI-Statistiken, die einem zweiten Benutzer zugeordnet sind.

8. Verfahren nach Anspruch 1, wobei ein erster Ablauf eine erste Teilmenge der mehreren GUI-Bildschirme umfasst und ein zweiter Ablauf eine zweite Teilmenge der mehreren GUI-Bildschirme umfasst;
wobei das Verfahren außerdem umfasst:
- Bereitstellen des ersten Ablaufs für den Benutzer zum Ausführen einer ersten Aufgabe durch Umschalten der GUI zwischen GUI-Bildschirmen des ersten Ablaufs, und
- Bereitstellen des zweiten Ablaufs für den Benutzer zum Ausführen einer zweiten Aufgabe durch Umschalten des GUI zwischen GUI-Bildschirmen des zweiten Ablaufs.

9. Verfahren nach Anspruch 1, wobei ein erstes Szenario eine erste Teilmenge der mehreren GUI-Bildschirme umfasst und ein zweites Szenario eine zweite Teilmenge der mehreren GUI-Bildschirme umfasst;
wobei das Verfahren außerdem umfasst:
- Bereitstellen des ersten Szenarios für den Benutzer zum Ausführen einer ersten Aufgabe durch Umschalten der GUI zwischen GUI-Bildschirmen der ersten Teilmenge, und
- Bereitstellen des zweiten Szenarios für den Benutzer zum Ausführen einer zweiten Aufgabe durch Umschalten der GUI zwischen GUI-Bildschirmen der zweiten Teilmenge.

10. Verfahren nach Anspruch 9, das außerdem umfasst: Bereitstellen einer Verknüpfung, die so konfiguriert ist, dass sie durch das elektronische Gerät die GUI zwischen einem GUI-Bildschirm des ersten Szenarios und einem GUI-Bildschirm des zweiten Szenarios umschaltet.

11. Eine Vorrichtung (20), die eine Abkürzungsverknüpfung (221) in einer grafischen Benutzeroberfläche (GUI) bereitstellt, um mindestens einen von mehreren GUI-Bildschirmen auf der Grundlage von GUI-Statistiken von einem früheren Besuch der GUI zu überspringen,
wobei die GUI-Statistiken Informationen enthalten, die mindestens einen Pfad und Informationen über die Häufigkeit, mit der der mindestens eine Pfad bei früheren Besuchen durchlaufen wurde, darstellen, wobei ein Pfad eine Folge von GUI-Bildschirmen umfasst, die von einem Benutzer nacheinander besucht werden;
die Vorrichtung (20) umfasst:
einen Prozessor (22);
eine Anzeige (30) und
einen Speicher (24), der einen Programmcode enthält, der, wenn er vom Prozessor (22) ausgeführt wird, die Vorrichtung (20) dazu veranlasst:
Anzeigen der mehreren GUI-Bildschirme durch Umschalten der GUI von einem aktuellen GUI-Bildschirm (220) zu einem jeweiligen nächsten GUI-Bildschirm (230) aus den mehreren GUI-Bildschirmen als Reaktion auf eine Benutzeraktion und gemäß vordefinierter GUI-Navigationsdefinitionen, wodurch ein Benutzer durch die GUI-Bildschirme navigieren kann;
Erzeugen (52) einer jüngsten Navigationshistorie in einem aktuellen Besuch der GUI, basierend auf dem aktuellen GUI-Bildschirm und vorherigen GUI-Bildschirmen, die in dem aktuellen Besuch der GUI angezeigt werden;
Identifizieren (53) mindestens eines Kandidatenpfades, wobei der mindestens eine Kandidatenpfad ein Pfad ist, der gemäß den GUI-Navigationsdefinitionen erlaubt ist, der in den GUI-Statistiken dargestellt ist und für den die jüngste Navigationshistorie eine Teilsequenz ist;
Bestimmen (54) eines oder mehrerer Kandidaten-Ziel-GUI-Bildschirme, wobei jeder Kandidaten-Ziel-GUI-Bildschirm ein GUI-Bildschirm nach einem jeweiligen nächsten GUI-Bildschirm (230) für den aktuellen GUI-Bildschirm (220) entlang des mindestens einen Kandidatenpfades ist, wobei, wenn ein Kandidatenpfad unter dem mindestens einen Kandidatenpfad mehr als einen GUI-Bildschirm nach dem nächsten GUI-Bildschirm in dem Kandidatenpfad hat, der Kandidatenpfad mehrere Kandidaten-Ziel-GUI-Bildschirme hat;
Auswählen eines Ziel-GUI-Bildschirms aus dem einen oder den mehreren Kandidaten-Ziel-GUI-Bildschirmen auf der Grundlage einer Kostenfunktion, einer Mindestanzahl der nächsten zu überspringenden GUI-Bildschirme und/oder der GUI-Statistik;
Einstellen der Abkürzungsverknüpfung, um auf den Ziel-GUI-Bildschirm zu zeigen, um die Vorrichtung (20) zu veranlassen, die GUI zu dem bestimmten Ziel-GUI-Bildschirm als Reaktion auf einen Benutzer zu schalten, der die Abkürzungsverknüpfung aktiviert;
Anzeigen (56) der Abkürzungsverknüpfung im aktuellen GUI-Bildschirm; und
Entfernen, als Reaktion auf das Hinzufügen eines GUI-Bildschirms zu der GUI oder das Entfernen eines GUI-Bildschirms von der GUI, aller Pfade der GUI, die von dem Hinzufügen bzw. dem Entfernen betroffen sind, und Aufrechterhalten aller GUI-Statistiken über Pfade, die nicht von dem Hinzufügen bzw. dem Entfernen betroffen sind.

12. Computerprogrammprodukt zum Bereitstellen eine Abkürzungsverknüpfung in einer grafischen Benutzeroberfläche (GUI) einer Vorrichtung nach Anspruch 11 zum Überspringen mindestens eines von mehreren GUI-Bildschirmen auf der Grundlage von GUI-Statistiken von einem früheren Besuch der GUI,
wobei das Computerprogrammprodukt einen Programmcode umfasst, der, wenn er von der Vorrichtung nach Anspruch 11 ausgeführt wird, die Vorrichtung veranlasst, das Verfahren nach einem der Ansprüche 1 bis 10 durchzuführen.

## Revendications

1. Méthode de fourniture d'un lien de raccourci (221) dans une interface utilisateur graphique, GUI, d'un dispositif électronique (20) pour sauter au moins un de multiples écrans GUI sur la base de statistiques GUI provenant d'une visite antérieure de la GUI,
dans laquelle les statistiques GUI incluent des informations représentant au moins un parcours et des informations sur une fréquence avec laquelle l'au moins un parcours a été navigué dans des visites antérieures, dans laquelle un parcours comprend une séquence d'écrans GUI destinés à être visités séquentiellement par un utilisateur ;
dans laquelle le dispositif électronique est configuré pour afficher les multiples écrans GUI en commutant la GUI d'un écran GUI actuel (220) à un écran GUI suivant respectif (230) parmi les multiples écrans GUI en réponse à une action d'utilisateur et en fonction de définitions de navigation GUI prédéfinies, en permettant ainsi à un utilisateur de naviguer à travers les écrans GUI ;
la méthode comprenant :
- la génération (52), par le dispositif électronique (20), d'un historique de navigation récente dans une visite actuelle de la GUI, sur la base de l'écran GUI actuel (220) et d'écrans GUI précédents affichés dans la visite actuelle de la GUI ;
- l'identification (53), par le dispositif électronique (20), d'au moins un parcours candidat, dans laquelle l'au moins un parcours candidat est un parcours autorisé selon les définitions de navigation GUI, représenté dans les statistiques GUI, et pour lequel l'historique de navigation récente est une sous-séquence ;
- la détermination (54), par le dispositif électronique (20), d'un ou plusieurs écrans GUI cibles candidats, dans laquelle chaque écran GUI cible candidat est un écran GUI après un écran GUI suivant respectif (230) pour l'écran GUI actuel (220) le long de l'au moins un parcours candidat, dans laquelle, quand un parcours candidat parmi l'au moins un parcours candidat a plus d'un écran GUI après l'écran GUI suivant dans le parcours candidat, le parcours candidat a de multiples écrans GUI cibles candidats ;
- la sélection d'un écran GUI cible parmi les un ou plusieurs écrans GUI cibles candidats sur la base d'une fonction de coût, d'un nombre minimal d'écrans GUI suivants à sauter et/ou des statistiques GUI ;
- l'établissement (55), par le dispositif électronique (20), le lien de raccourci (221) pour pointer sur l'écran GUI cible pour amener le dispositif électronique (20) à commuter la GUI sur l'écran GUI cible déterminé en réponse à un utilisateur activant le lien raccourci (221) ;
- l'affichage (56), par le dispositif électronique, du lien de raccourci (221) dans l'écran GUI actuel (220) ; et
- en réponse à l'ajout d'un écran GUI à la GUI ou l'élimination d'un écran GUI de la GUI, l'élimination de tous les parcours de la GUI qui sont concernés respectivement par l'ajout et l'élimination, et le maintien de toutes les statistiques GUI sur des parcours qui ne sont pas concernés respectivement par l'ajout ou l'élimination.

2. Méthode selon la revendication 1, comprenant en outre l'ajout, par le dispositif électronique (20), d'un parcours aux statistiques GUI en collectant une séquence d'écrans GUI affichés en réponse à l'utilisateur navigant à travers la GUI dans la visite actuelle de la GUI.

3. Méthode selon la revendication 1, dans laquelle les statistiques GUI comprennent en outre, pour chaque parcours de l'au moins un parcours représenté dans les statistiques GUI, un poids représentant la fréquence avec laquelle un parcours respectif a été navigué dans des visites antérieures.

4. Méthode selon la revendication 3, dans laquelle le poids d'un parcours est augmenté chaque fois qu'un utilisateur navigue le long dudit parcours.

5. Méthode selon la revendication 3, dans laquelle les statistiques GUI concernent le poids d'un parcours à un niveau d'utilisateurs individuels, au niveau de rôles de l'utilisateur et/ou au niveau de groupes d'utilisateurs.

6. Méthode selon la revendication 1, dans laquelle les statistiques GUI comprennent en outre des séquences d'entrées d'utilisateur collectées associées aux parcours.

7. Méthode selon la revendication 1, dans laquelle les statistiques GUI comprennent des premières statistiques GUI associées à un premier utilisateur et des secondes statistiques GUI associées à un second utilisateur.

8. Méthode selon la revendication 1, dans laquelle un premier flux comprend un premier sous-ensemble des multiples écrans GUI et un second flux comprend un second sous-ensemble des multiples écrans GUI ;
dans laquelle la méthode comprend en outre :
- la fourniture du premier flux à l'utilisateur pour réaliser une première tâche en commutant la GUI entre des écrans GUI du premier flux, et
- la fourniture du second flux à l'utilisateur pour réaliser une seconde tâche en commutant la GUI entre des écrans GUI du second flux.

9. Méthode selon la revendication 1, dans laquelle un premier scénario comprend un premier sous-ensemble des multiples écrans GUI et un second scénario comprend un second sous-ensemble des multiples écrans GUI ;
dans laquelle la méthode comprend en outre :
- la fourniture du premier scénario à l'utilisateur pour réaliser une première tâche en commutant la GUI entre des écrans GUI du premier sous-ensemble, et
- la fourniture du second scénario à l'utilisateur pour réaliser une seconde tâche en commutant la GUI entre des écrans GUI du second sous-ensemble.

10. Méthode selon la revendication 9, comprenant en outre : la fourniture d'un lien configuré pour commuter, par le dispositif électronique, la GUI entre un écran GUI du premier scénario et un écran GUI du second scénario.

11. Appareil (20) fournissant un lien de raccourci (221) dans une interface utilisateur graphique, GUI, pour sauter au moins un de multiples écrans GUI sur la base de statistiques GUI provenant d'une visite antérieure de la GUI,
dans lequel les statistiques GUI incluent des informations représentant au moins un parcours et des informations sur une fréquence avec laquelle l'au moins un parcours a été navigué dans des visites antérieures, dans lequel un parcours comprend une séquence d'écrans GUI destinés à être visités séquentiellement par un utilisateur ;
l'appareil (20) comprenant :
un processeur (22) ;
un dispositif d'affichage (30) et
une mémoire (24) comportant un code de programme qui, quand il est exécuté par le processeur (22), amène l'appareil (20) à :
afficher les multiples écrans GUI en commutant la GUI d'un écran GUI actuel (220) à un écran GUI suivant respectif (230) parmi les multiples écrans GUI en réponse à une action d'utilisateur et en fonction de définitions de navigation GUI prédéfinies, en permettant ainsi à un utilisateur de naviguer à travers les écrans GUI ;
la génération (52) d'un historique de navigation récente dans une visite actuelle de la GUI, sur la base de l'écran GUI actuel et d'écrans GUI précédents affichés dans la visite actuelle de la GUI ;
l'identification (53) d'au moins un parcours candidat, dans lequel l'au moins un parcours candidat est un parcours autorisé selon les définitions de navigation GUI, représenté dans les statistiques GUI, et pour lequel l'historique de navigation récente est une sous-séquence ;
la détermination (54) d'un ou plusieurs écrans GUI cibles candidats, dans lequel chaque écran GUI cible candidat est un écran GUI après un écran GUI suivant respectif (230) pour l'écran GUI actuel (220) le long de l'au moins un parcours candidat, dans lequel, quand un parcours candidat parmi l'au moins un parcours candidat a plus d'un écran GUI après l'écran GUI suivant dans le parcours candidat, le parcours candidat a de multiples écrans GUI cibles candidats ;
la sélection d'un écran GUI cible parmi les un ou plusieurs écrans GUI cibles candidats sur la base d'une fonction de coût, d'un nombre minimal d'écrans GUI suivants à sauter et/ou des statistiques GUI ;
l'établissement du lien de raccourci pour pointer sur l'écran GUI cible pour amener l'appareil à commuter la GUI sur l'écran GUI cible déterminé en réponse à un utilisateur activant le lien raccourci ;
l'affichage (56) du lien de raccourci dans l'écran GUI actuel ; et
l'élimination, en réponse à l'ajout d'un écran GUI à la GUI ou l'élimination d'un écran GUI de la GUI, de tous les parcours de la GUI qui sont concernés respectivement par l'ajout et l'élimination, et le maintien de toutes les statistiques GUI sur des parcours qui ne sont pas concernés respectivement par l'ajout ou l'élimination.

12. Produit programme d'ordinateur pour fournir un lien de raccourci dans une interface utilisateur graphique, GUI, d'un appareil selon la revendication 11 pour sauter au moins un de multiples écrans GUI sur la base de statistiques GUI provenant d'une visite antérieure de la GUI,
le produit programme d'ordinateur comprenant un code de programme qui, quand il est exécuté par l'appareil selon la revendication 1, amène l'appareil à réaliser la méthode selon l'une quelconque des revendications 1 à 10.
